(19) Europäisches Patentamt / European Patent Office / Office européen des brevets

(11) **EP 4 047 971 B1**

(12) **EUROPEAN PATENT SPECIFICATION**

(45) Date of publication and mention
of the grant of the patent:
**25.03.2026  Bulletin 2026/13**

(21) Application number: **22157200.1**

(22) Date of filing: **17.02.2022**

(51) International Patent Classification (IPC):
*H04W 12/06* (2021.01)    *H04W 12/02* (2009.01)

(52) Cooperative Patent Classification (CPC):
**H04W 12/06; H04W 12/02**

(54) **PREVENTION OF LINKABILITY ATTACKS**

VERHINDERUNG VON LINKABILITY-ANGRIFFEN

PRÉVENTION D'ATTAQUES DE LIAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2021  FI 20215190**

(43) Date of publication of application:
**24.08.2022   Bulletin 2022/34**

(73) Proprietor: **Nokia Technologies Oy
02610 Espoo (FI)**

(72) Inventor: **MAVUREDDI DHANASEKARAN,
Ranganathan
Munich (DE)**

(74) Representative: **Script Intellectual Property LLP
Suite J, Anchor House
School Close
Chandlers Ford
Eastleigh, Hampshire SO53 4DY (GB)**

(56) References cited:
**WO-A1-2020/147602     WO-A1-2020/198991**

• **"3rd Generation Partnership Project; Technical
Specification Group Services and System
Aspects; Study on authentication enhancements
in 5G System; (Release 17)", vol. SA WG3, no.
V0.10.0, 4 February 2021 (2021-02-04), pages 1 -
50, XP051999404, Retrieved from the Internet
<URL:https://ftp.3gpp.org/Specs/archive/
33_series/33.846/33846-0a0.zip S3-210758/
S3-210758_TR33846-0100-cl.doc> [retrieved on
20210204]**

**Description**

FIELD

Various example embodiments relate to authentication procedures between a user equipment and a network.

BACKGROUND

In authentication procedures between a user equipment and a network, an attacker may intercept an authentication request message and perform a linkability attack. A linkability attack is an attack, where an attacker can detect the presence of a victim subscriber in an area monitored by the attacker.

Thus, there is a need for a mechanism to mitigate linkability attacks. WO2020/147602) discloses an authentication method where the cause value for authentication failure is encrypted.

"3rd Generation Partnership Project, 3GPP Standard; TR 33.846 no. vO.IO.O, XP051999404 discloses, for example, potential security requirements and solutions of how to enhance the authentication process, and potential security requirements and solutions of how to mitigate linkability attacks.

WO2020198991 discloses methods for operating a wireless device and network entities. The method for operating a wireless device comprises generating a random value, generating a sequence number, assembling an authentication token from at least the generated sequence number, and sending a message to an entity of the network requesting at least one of registration on the network or service over the network, the message including the generated random value and the authentication token.

The methods for operating network entities allow for the authentication of the wireless device using the random value and authentication token. Also disclosed are a wireless device, network entities and a computer program product configured to carry out methods for operating a wireless device and network entities.

SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a further aspect, there is provided a computer program configured to cause the method of the fourth aspect, or of the fifth aspect, or of the sixth aspect to be performed.

BRIEF DESCRIPTION OF THE DRAWINGS

Fig. 1 shows, by way of example, a network architecture of communication system;
Fig. 2 shows, by way of example, an initiation of an authentication procedure and selection of an authentication method;
Fig. 3 shows, by way of example, a flowchart of a method;
Fig. 4 shows, by way of example, an authentication failure procedure;
Fig. 5 shows, by way of example, signalling between a subscriber identity module and a user equipment;
Fig. 6a shows, by way of example, a flowchart of a method;
Fig. 6b shows, by way of example, a flowchart of a method;
Fig. 7 shows, by way of example, a block diagram of an apparatus.

DETAILED DESCRIPTION

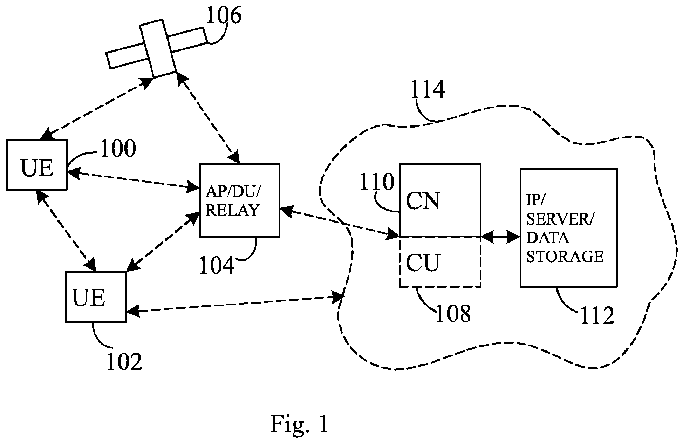

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

The example of Fig. 1 shows a part of an exemplifying radio access network. Fig. 1 shows user devices 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. An example of the network node configured to operate as a relay station is integrated access and backhaul node (IAB). The distributed unit (DU) part of the IAB node performs BS functionalities of the IAB node, while the backhaul connection is carried out by the mobile termination (MT) part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) technology at both UE and gNB side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual subnetworks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

A core network 110, e.g. 5G core network, may comprise security entities such as authentication server function (AUSF), authentication credential repository and processing function (ARPF), subscription identifier de-concealing function (SIDF) and security anchor function (SEAF).

Authentication and key agreement (AKA) procedures enable mutual authentication between a user equipment (UE) and network, and provide keying material that may be used in following security procedures between the UE and the serving network. The keying material generated by the AKA procedure results in an anchor key that may be named as $K_{SEAF}$. The $K_{SEAF}$ is provided by the authentication server function (AUSF) of the home network to the security anchor function (SEAF) of the serving network. $K_{SEAF}$ is a key seed for a secure channel that the subscriber and the serving network will eventually establish.

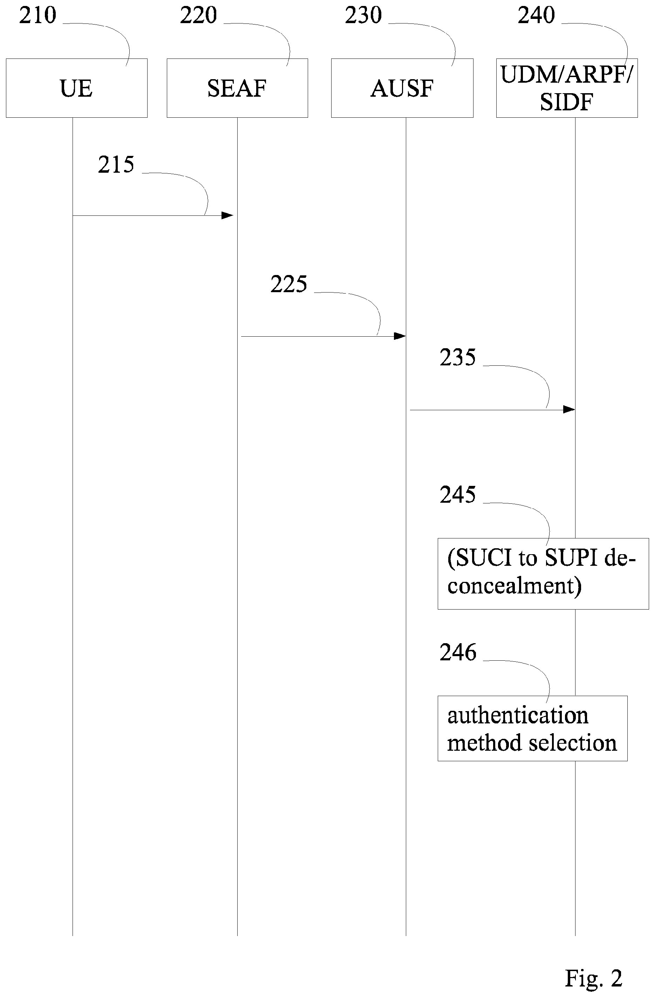

Fig. 2 shows, by way of example, an initiation of an authentication procedure and selection of an authentication method. The UE 210 may initiate or trigger the initial registration procedure, e.g. by using subscription concealed identifier (SUCI) or globally unique temporary identifier (5G-GUTI) in a registration request 215 which is sent from the UE 210 to SEAF 220.

The SEAF 220 invokes an authentication service, e.g. a Nausf_UEAuthentication service, by sending an authentication request 225 to the AUSF 230. The request may comprise subscription concealed identifier (SUCI) or subscription permanent identifier (SUPI), and the serving network name (SN-name).

Upon receiving the authentication request 225, the AUSF 230 checks whether the requesting SEAF 220 in the serving network is entitled to use the serving network name in the authentication request 225.

The AUSF 230 sends an authentication request 235, e.g. a Nudm_UEAuthentication_Get request, to unified data management (UDM) function 240. The request may comprise SUCI or SUPI and the serving network name.

When the UDM 240 receives the request 235, the UDM may invoke subscription identifier de-concealing function (SIDF) if a SUCI is received 245. SIDF may de-conceal SUCI to gain SUPI before UDM can process the request. If SUPI is received, or when the SUPI is achieved through de-concealment, the UDM/ARPF (authentication credential repository and processing function i.e. ARPF) may choose the authentication method 246 based on the SUPI.

Let us consider that the 5G AKA is selected as the authentication method.

Upon receiving a request for authentication material, the home network or home environment computes an authentication challenge. The AKA challenge comprises a random nonce or number RAND and an authentication token AUTN. AUTN comprises a message authentication code (MAC), that is, an authentication sequence number SQN which may be maintained per user subscription in home environment (HE) and may be incremented by the HE for every authentication procedure. These values may be passed in encrypted form. Universal subscriber identity module (USIM) of the UE may verify based on these values if the challenge is fresh or results in synchronization failure, e.g. due to the values being out of range.

When a received MAC value from AUTN does not match with generated MAC in USIM, then MAC failure is sent to an access and mobility management function (AMF).

The UE may detect that a challenge is not fresh based on detecting that the SQN, i.e. the reference sequence number sent by the network, is out of range. When the UE receives a challenge that is not fresh, the UE responds to the challenge with a synchronization failure message that contains a value or parameter AUTS. AUTS comprises in encrypted form the value SQN that is maintained by the UE in the universal integrated circuit card (UICC), which may be interpreted as the lowest value the UE is willing to accept. Moreover, AUTS comprises a message authentication code that proves that AUTS was really computed by the UE, which has a USIM containing the root key K, and has not been tampered.

When the network receives a valid AUTS from the UE, it may map its own SQN value to the one received from the UE. This is how SQN synchronization happens when the sequence number maintained at the home subscriber server (HSS) and at the UE gets out of synchronization.

The AUTS may be defined as AUTS = $Conc(SQN_{MS}) \parallel MAC\text{-}S$. $Conc(SQN_{MS}) = SQN_{MS} \oplus f5^*_K(RAND)$ is the concealed value of the counter $SQN_{MS}$ in the mobile station (MS), and MAC-S = $f1^*_K(SQN_{MS} \parallel RAND \parallel AMF)$ where RAND

is the random value received in the current user authentication request and AMF is the authentication management field. Algorithm or function f1* is a message authentication code (MAC) function with the property that no valuable information can be inferred from the function values of f1* about those of f1, ... , f5, f5* and vice versa. Algorithm f5* is the key generating function used to compute anonymity key (AK) in re-synchronisation procedures with the property that no valuable information can be inferred from the function values of f5* about those of f1, f1*, f2, ... , f5 and vice versa. ∥ is a symbol for concatenation, and ⊕ is a symbol for exclusive or. K is a long-term secret kay shared between the USIM and the authentication center AuC.

A linkability attack is an attack, where an attacker can detect the presence of a victim subscriber in an area monitored by the attacker. An attacker may have previously intercepted one legitimate authentication request message comprising the pair (RAND, AUTN) sent by the network to UE. The captured authentication request message may be replayed by the attacker or adversary each time the attacker wants to check the presence of the UE in a particular area.

The AKA procedures are subjected to linkability attacks because of the error messages such as MAC failure message and synchronization failure message (Synch failure). Based on these error messages, that are transmitted in plain text, the attacker can distinguish any UE from the one the authentication request was originally sent to. In response to receiving the replayed authentication challenge and authentication vectors (RAND, AUTN), the victim UE may successfully verify the MAC and send a synchronization failure message. However, the MAC verification fails when executed by any other UE, and then a MAC failure message is sent. The implementation of false base stations, e.g. few false base stations, would then allow an attacker to trace the movements of a victim UE, resulting in a breach of the subscriber's untraceability.

The attacker may distinguish the MAC failure and synchronization failure. For example, the attacker may distinguish the failures based on a cause of failure which is embedded in the authentication failure message sent by the victim UE. As another example, the attacker may distinguish the failures based on a difference between the length of the response to MAC failure and the length of the response for SYNC failure.

If a linkability attack occurs, it represents a breach of a user's untraceability, since the attacker can establish the traceability of the user by studying the failure messages and detecting the user's presence in a specific area by replaying an old legitimate authentication vector (AV) including RAND and AUTN.

There is provided mechanisms to mitigate the linkability attacks.

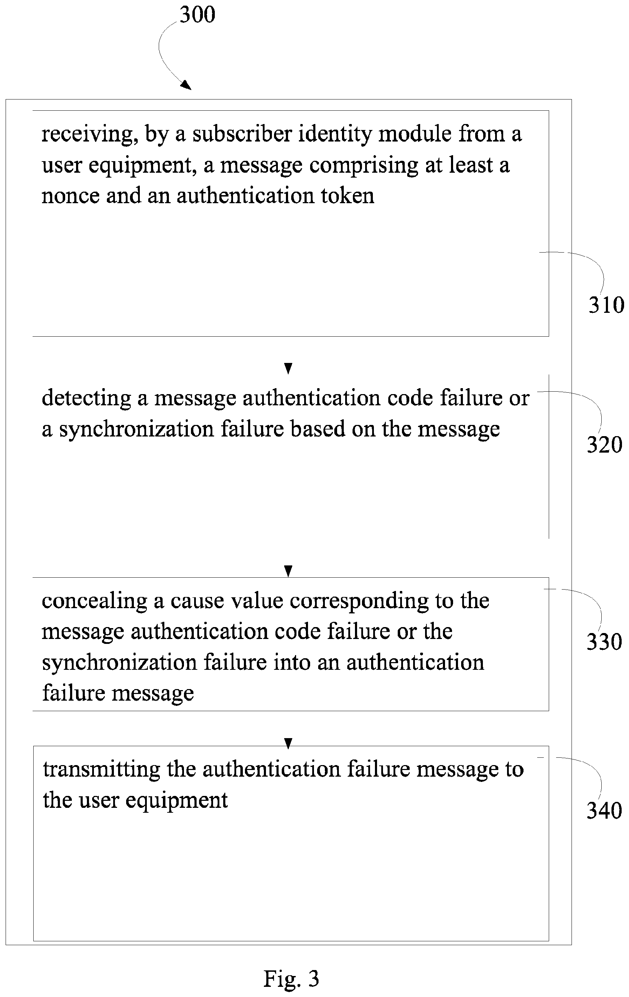

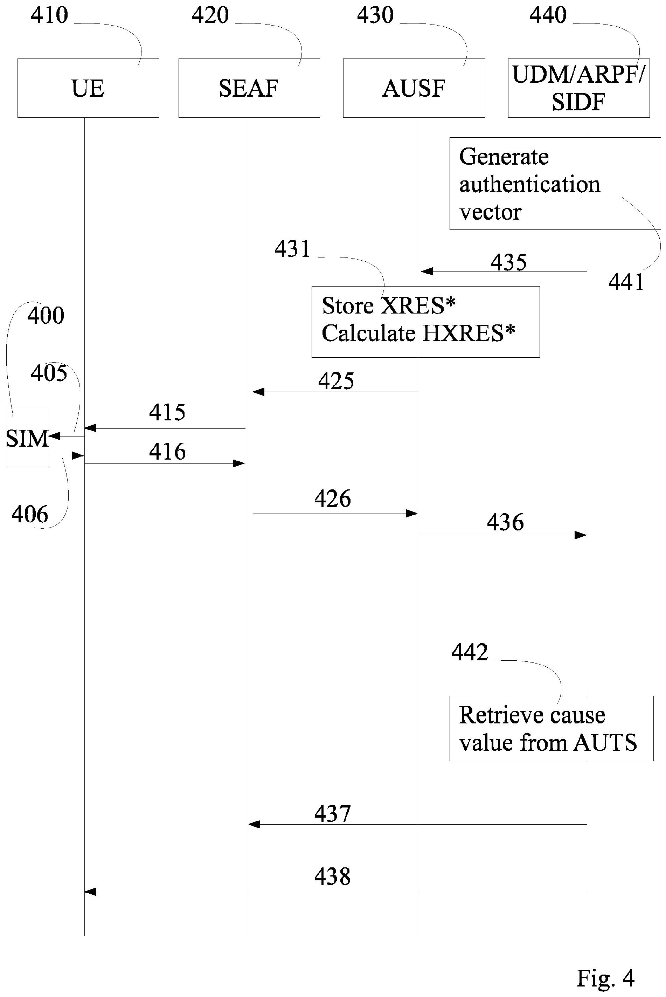

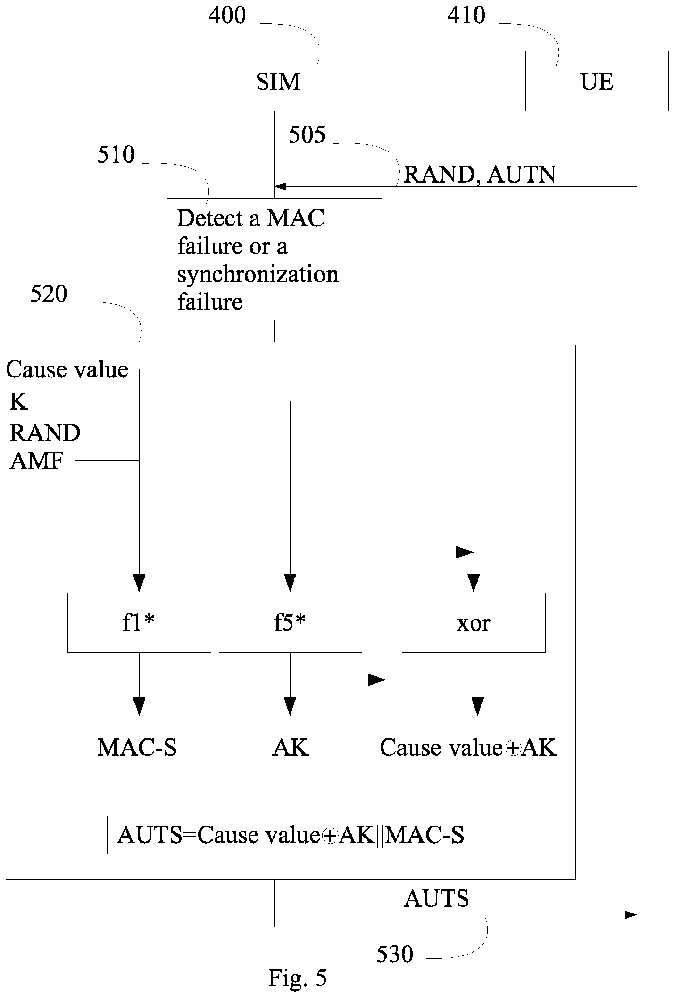

Fig. 3 shows, by way of example, a flowchart of a method. The method may be performed by a subscriber identity module (SIM), e.g. universal SIM (USIM), or in a control device configured to control the functioning thereof, when installed therein. The SIM or USIM may be e.g. the SIM 400 of Fig. 4 and Fig. 5, which is comprised in a user equipment UE. The method 300 comprises receiving 310, by a subscriber identity module from a user equipment, a message comprising at least a nonce and an authentication token. The method 300 comprises detecting 320 a message authentication code failure or a synchronization failure based on the message. The method 300 comprises concealing 330 a cause value corresponding to the message authentication code failure or the synchronization failure into an authentication failure message. The method 300 comprises transmitting 340 the authentication failure message to the user equipment.

The method as disclosed herein enables concealment of the cause value such that UDM, e.g. only the UDM, is able to de-conceal it. The method provides a way to mitigate linkability attacks.

Fig. 4 shows, by way of example, an authentication failure procedure. Initial registration procedure is triggered from a user equipment, UE 410, and may be performed as disclosed in the context of Fig. 2.

A network function or node, e.g. the unified data management (UDM) 440 generates 441 an authentication vector (AV) and derives $K_{AUSF}$ and calculates an expected response XRES*. For example, UDM/ARPF may create 5G home environment (HE) authentication vector (AV) from RAND, AUTN, XRES* and $K_{AUSF}$. The AV may be generated with an authentication management field (AMF) separation bit set to 1, for example.

The UDM 440 returns or transmits 5G HE AV to a network function e.g. authentication server function (AUSF) 430 in Nudm_UEAuthentication_Get Response 435. The AV may be used for 5G AKA. The UDM 440 includes SUPI in the Nudm_UEAuthentication_Get Response after de-concealment of SUCI by SIDF.

The AUSF 430 stores 431 the XRES* temporarily together with the received SUCI or SUPI.

The AUSF 430 generates 5G authentication vector from the 5G HE authentication vector (AV) received from the UDM/ARPF by computing 431 the HXRES* from XRES* and $K_{SEAF}$ from $K_{AUSF}$, and replacing the XRES* with the HXRES* and $K_{AUSF}$ with $K_{SEAF}$ in the 5G HE AV. Hash expected response (HXRES*) is a response to the challenge that the serving network expects.

The AUSF 430 then removes the $K_{SEAF}$ and returns the 5G serving environment (SE) authentication vector (RAND, AUTN, HXRES*) to the SEAF 420 in a Nausf_UEAuthentication_Authenticate Response 425.

The SEAF 420 sends an authentication request 415 to the UE 410. The authentication request comprises at least a nonce and an authentication token (RAND, AUTN). The authentication request may be a non-access stratum (NAS) message authentication request.

The authentication request 415 message may also include a 5G key set identifier (ngKSI) that may be used by UE and AMF to identify the $K_{AMF}$ and the partial native security context that is created if the authentication is successful.

The authentication request 415 message may also include the anti-bidding down between architectures (ABBA) parameter.

The UE 410 receives the authentication request 415 comprising at least a nonce (RAND) and an authentication token (AUTN). The UE 410 forwards 405 the RAND and AUTN received in NAS message authentication request to a SIM 400, e.g. USIM.

Fig. 5 shows, by way of example, signalling between a subscriber identity module and the UE. The SIM 400, e.g. USIM, receives a message 505 comprising at least a nonce and an authentication token (RAND, AUTN). The message is received from the UE 410. The USIM is comprised in the UE.

The USIM may perform the following after reception of the RAND and AUTN: USIM computes XMAC and compares this with received MAC from AUTN. First, the USIM computes the anonymity key AK=f5$_K$(RAND) and retrieves the sequence number SQN= (SQN ⊕ AK) ⊕ AK. XMAC is computed as XMAC=f1$_K$ (SQN ‖ RAND ‖ AMF). If XMAC and received MAC are different, then a MAC failure is detected. If they are the same, the USIM may continue to verify whether the received sequence number SQN is in correct range or not. If it is not in correct range, then a synchronization failure is detected. If the SQN is in correct range, then USIM computes response RES to be included in authentication response.

Let us consider a situation, wherein the USIM detects 510 a MAC failure or a synchronization failure based on received message, or in other words, based on the nonce and the authentication token comprised in the message. A cause value indicates a reason for the failure. The cause value may comprise 8 bits, for example. For a MAC failure, the cause value may be 00010100. For a synchronization failure, the cause value may be 00010101.

The USIM generates an authentication failure message with AUTS. The USIM conceals 520 the cause value corresponding to the MAC failure or the synchronization failure into the authentication failure message. The cause value is taken as input for concealment when generating an authentication failure message with AUTS. The concealment may be written as below:

$$\text{MAC-S} = \text{f1*}_K(\text{Cause value} \parallel \text{RAND} \parallel \text{AMF})$$

$$\text{AK} = \text{f5*}_K(\text{RAND})$$

$$\text{Conc(Cause value)} = \text{Cause value} \oplus \text{AK}$$

$$\text{AUTS} = \text{Conc(Cause value )} \parallel \text{MAC-S}$$

Thus, the concealing the cause value into the authentication failure message comprises providing the cause value as input to a message authentication function f1* together with a long-term key K, a nonce RAND, and an authentication management field AMF. Output from the f1* is MAC-S.

Then, the long-term key K and the nonce RAND are provided to a key generating function f5* as input to achieve an anonymity key AK as output.

Then, the anonymity key AK and the cause value are provided as input to an exclusive or operator xor.

The authentication failure message is generated as a concatenation of an output of the xor and MAC-S.

The USIM transmits 530 the AUTS to the UE 410.

Referring back to Fig. 4, the UE 410 receives 406 the authentication failure message with AUTS from the SIM 400. The authentication failure message with AUTS is sent 416 from UE 410 to a network function, e.g. SEAF 420. The message may be sent 416 with 5G mobility management (5GMM) cause as a generic authentication failure cause along with AUTS. This generic cause of the failure may be comprised in plain text in the authentication failure message so that SEAF and AUSF may identify that failure has occurred. However, the generic cause does not indicate whether the reason for the failure has been MAC failure or synchronization failure. The generic value may be given as 00010001, for example.

Upon receiving an authentication failure message with AUTS from the UE 410, the SEAF 420 sends 426 an Nausf_UEAuthentication_Authenticate Request message with AUTS to the AUSF 430. The message may also comprise a synchronization failure indication.

The AUSF 430 sends 436 an Nudm_UEAuthentication_Get Request message to the UDM/ARPF 440. The message comprises the nonce RAND, which has been sent to the UE 410 in the preceding authentication request 415, and AUTS, which has been received by the SEAF 420 in the response 416 from the UE 410 to that request.

The UDM 440 receives 436 a message from the AUSF 430. The message comprises the authentication failure message with AUTS and the nonce RAND, which has been generated 441 by the UDM. The UDM 440 de-conceals or retrieves 442 a cause value from AUTS using the RAND value. For example, the UDM may retrieve the cause value by cause value = Conc(cause value) $\oplus$ f5*$_K$(RAND). In other words, the nonce and the long-term key K may be provided as input to a key generating function to achieve an anonymity key. The anonymity key and the concealed cause value are provided as input to an exclusive or operator to achieve the cause value.

If the de-concealed cause value is indicative of MAC failure, the UDM 440 updates 437 SEAF 420 with MAC failure for the authentication procedure. The primary AKA procedure may be terminated. The UDM may initiate an authentication procedure to obtain SUCI from the UE. UDM may then check that the 5G-GUTI originally used in the AKA corresponded to the correct SUPI. If the 5G-GUTI does not correspond with SUPI, the UDM may send a new authentication request to the UE. If the 5G-GUTI does correspond with SUPI, the primary AKA may be terminated, if not already terminated.

If the de-concealed cause value is indicative of synchronization failure, the UDM may generate a new authentication vector AV, and send 438 an AKA challenge to the UE.

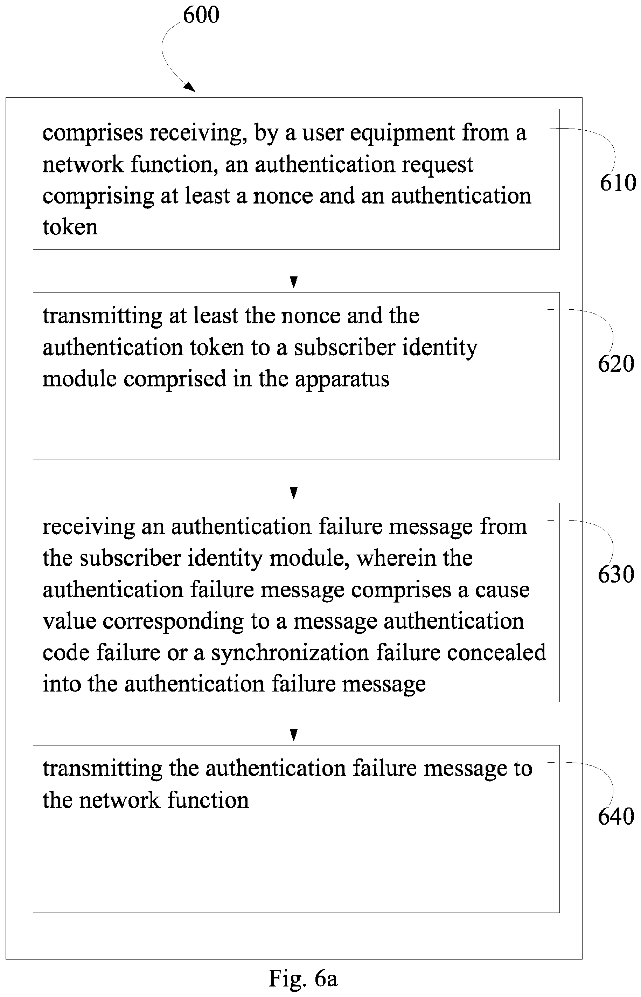

Fig. 6a shows, by way of example, a flowchart of a method. The method may be performed by a user equipment, e.g. a UE 410 of Fig. 4, or in a control device configured to control the functioning thereof, when installed therein. The method 600 comprises receiving 610, by a user equipment from a network function, an authentication request comprising at least a nonce and an authentication token. The method 600 comprises transmitting 620 at least the nonce and the authentication token to a subscriber identity module comprised in the apparatus. The method 600 comprises receiving 630 an authentication failure message from the subscriber identity module, wherein the authentication failure message comprises a cause value corresponding to a message authentication code failure or a synchronization failure concealed into the authentication failure message. The method 600 comprises transmitting 640 the authentication failure message to the network function.

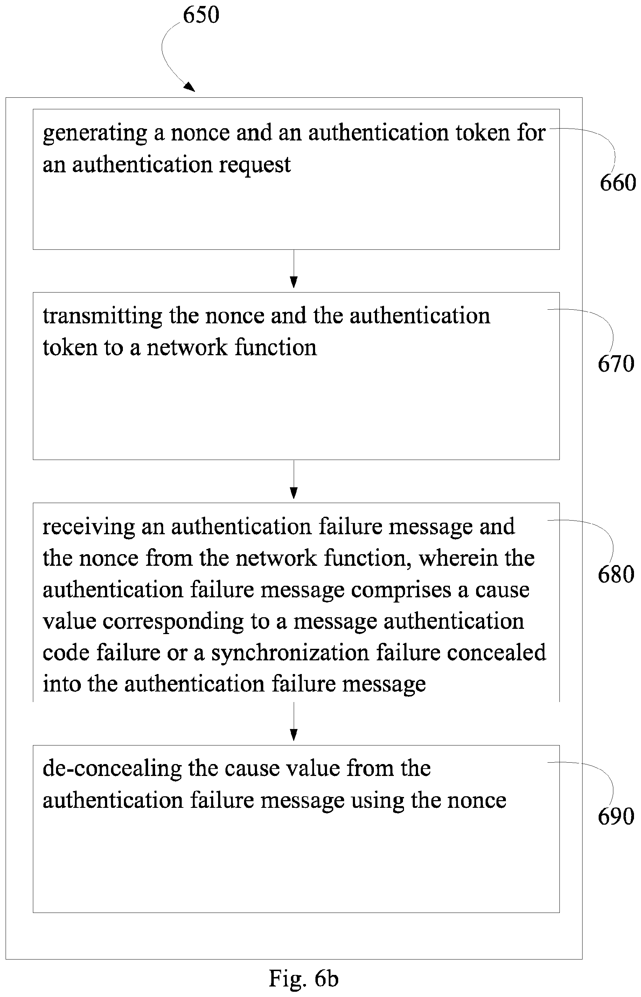

Fig. 6b shows, by way of example, a flowchart of a method. The method may be performed by a network function, e.g. a unified data management (UDM), or in a control device configured to control the functioning thereof, when installed therein. The method 650 comprises generating 660 a nonce and an authentication token for an authentication request. The method 650 comprises transmitting 670 the nonce and the authentication token to a network function. The method 650 comprises receiving 680 an authentication failure message and the nonce from the network function, wherein the authentication failure message comprises a cause value corresponding to a message authentication code failure or a synchronization failure concealed into the authentication failure message. The method 650 comprises de-concealing 690 the cause value from the authentication failure message using the nonce.

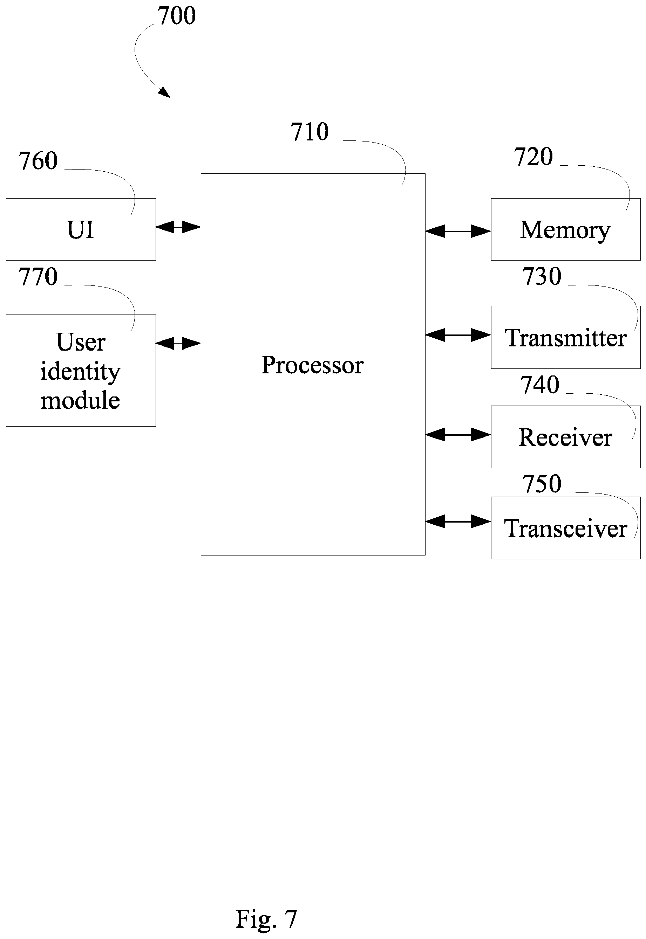

Fig. 7 shows, by way of example, a block diagram of an apparatus. Illustrated is an apparatus or device 700, which may comprise, for example, a mobile communication device such as mobile 110 of Fig. 1 or a UE 410 of Fig. 4, or a network function such as UDM 440 of Fig. 4. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise, for example, a Cortex-A8 processing core manufactured by ARM Holdings or a Steamroller processing core designed by Advanced Micro Devices Corporation. Processor 710 may comprise at least one Qualcomm Snapdragon and/or Intel Atom processor. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network function or a server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise random-access memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise computer instructions that processor 710 is configured to execute. When computer instructions configured to cause processor 710 to perform certain actions are stored in memory 720, and device 700 overall is configured to run under the direction of processor 710 using computer instructions from memory 720, processor 710 and/or its at least one processing core may be considered to be configured to perform said certain actions. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 700 may comprise a near-field communication, NFC, transceiver 750. NFC transceiver 750 may support at least one NFC technology, such as NFC, Bluetooth, Wibree or similar technologies.

Device 700 may comprise user interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a subscriber identity module, SIM, or USIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700. The SIM or USIM may comprise a processor, at least one memory including computer program code, wherein the at least one memory and the computer program code are configured to, with the at least one processor, cause the module to perform a method as disclosed herein.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver arranged to, for example, receive information via at least one electrical lead from receiver 740 for processing in processor 710. Alternatively to a serial bus, the receiver may comprise a parallel bus receiver.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the embodiment various ways of interconnecting at least two of the aforementioned devices may be selected.

**Claims**

1. An apparatus (410), comprising at least one processor; and at least one memory including computer code, the at least one memory and the computer code configured to, with the at least one processor, cause the apparatus to perform:

   receiving, from a network function (420), an authentication request (415) comprising at least a nonce and an authentication token;
   transmitting (405) at least the nonce and the authentication token to a subscriber identity module (400) comprised in the apparatus (410);
   receiving (406) an authentication failure message from the subscriber identity module (400), wherein the authentication failure message comprises a cause value corresponding to a message authentication code failure or a synchronization failure concealed into the authentication failure message by:

   providing the cause value as input to a message authentication function together with a long-term key, a nonce, and an authentication management field;
providing the long-term key and the nonce as input to a key generating function to achieve an anonymity key;
providing the anonymity key and the cause value as input to an exclusive or operator;
generating the authentication failure message as a concatenation of an output of the exclusive or operator and an output of the message authentication function; and wherein the apparatus is caused to perform:

transmitting (416) the authentication failure message to the network function (420).

2. The apparatus (410) of claim 1, further caused to perform:

receiving a generic cause value corresponding to the message authentication code failure or a synchronization failure together with the authentication failure message, wherein the generic cause value is 00010001;
transmitting the generic cause value to the network function (420).

3. The apparatus (410) of claim 2, further caused to perform:
receiving (438) a new nonce and a new authentication token from a network function (440).

4. An apparatus (440) comprising at least one processor; and at least one memory including computer code, the at least one memory and the computer code configured to, with the at least one processor, cause the apparatus to perform:

generating (441) a nonce and an authentication token for an authentication request;
transmitting (435) the nonce and the authentication token to a network function;
receiving (436) an authentication failure message and the nonce from the network function,
wherein the authentication failure message comprises a cause value corresponding to a message authentication code failure or a synchronization failure concealed into the authentication failure message; and
de-concealing (442) the cause value from the authentication failure message using the nonce by:

providing the nonce and a long-term key as input to a key generating function to achieve an anonymity key; and
providing the anonymity key and the concealed cause value as input to an exclusive or operator to achieve the cause value.

5. The apparatus (440) of claim 4, further caused to perform:

in response to the cause value corresponding to the message authentication code failure;
transmitting (437) an update to a network function with the de-concealed cause value.

6. The apparatus (440) of claim 4, further caused to perform:

in response to the cause value corresponding to the synchronization failure generating a new nonce and a new authentication token;
transmitting (438) the new nonce and the new authentication token to a user equipment (410).

7. The apparatus of any of the claims 4 to 6, wherein the apparatus comprises a unified data management function.

8. An apparatus comprising at least one processor; and at least one memory including computer code, the at least one memory and the computer code configured to, with the at least one processor, cause the apparatus to perform:

receiving, from a user equipment (410), a message comprising at least a nonce and an authentication token;
detecting (510) a message authentication code failure or a synchronization failure based on the message;
concealing (520) a cause value corresponding to the message authentication code failure or the synchronization failure into an authentication failure message, wherein the concealing the cause value comprises:

providing the cause value as input to a message authentication function together with a long-term key, a nonce, and an authentication management field;
providing the long-term key and the nonce as input to a key generating function to achieve an anonymity key;
providing the anonymity key and the cause value as input to an exclusive or operator;
generating the authentication failure message as a concatenation of an output of the exclusive or operator and an output of the message authentication function; and wherein the apparatus is caused to perform: transmitting (530) the authentication failure message to the user equipment (410).

9. The apparatus (400) of claim 8, further caused to perform transmit a generic cause value corresponding to the message authentication code failure or the synchronization failure together with the authentication failure message, wherein the generic cause value is 00010001.

10. The apparatus of claim 8 or 9, wherein the apparatus is a subscriber identity module (400).

11. A method (600) comprising

receiving /610), by a user equipment (410) from a network function, an authentication request comprising at least a nonce and an authentication token;
transmitting (620) at least the nonce and the authentication token to a subscriber identity module (400) comprised in the apparatus (410);
receiving (630) an authentication failure message from the subscriber identity module (400), wherein the authentication failure message comprises a cause value corresponding to a message authentication code failure or a synchronization failure concealed into the authentication failure message by:

providing the cause value as input to a message authentication function together with a long-term key, a nonce, and an authentication management field;
providing the long-term key and the nonce as input to a key generating function to achieve an anonymity key;
providing the anonymity key and the cause value as input to an exclusive or operator;
generating the authentication failure message as a concatenation of an output of the exclusive or operator and an output of the message authentication function; and wherein the method comprises

transmitting (630) the authentication failure message to the network function.

12. A method (300) comprising

receiving (310), by a subscriber identity module (400) from a user equipment (410), a message comprising at least a nonce and an authentication token;
detecting (320) a message authentication code failure or a synchronization failure based on the message;
concealing (330) a cause value corresponding to the message authentication code failure or the synchronization failure into an authentication failure message, , wherein the concealing the cause value comprises:

providing the cause value as input to a message authentication function together with a long-term key, a nonce, and an authentication management field;
providing the long-term key and the nonce as input to a key generating function to achieve an anonymity key;
providing the anonymity key and the cause value as input to an exclusive or operator;

generating the authentication failure message as a concatenation of an output of the exclusive or operator and an output of the message authentication function; and wherein the method comprises:
transmitting (340) the authentication failure message to the user equipment (410).

13. A method (650) comprising

generating (660) a nonce and an authentication token for an authentication request;
transmitting (670) the nonce and the authentication token to a network function;
receiving (680) an authentication failure message and the nonce from the network function, wherein the authentication failure message comprises a cause value corresponding to a message authentication code failure or a synchronization failure concealed into the authentication failure message; and
de-concealing (690) the cause value from the authentication failure message using the nonce by providing the nonce and a long-term key as input to a key generating function to achieve an anonymity key; and
providing the anonymity key and the concealed cause value as input to an exclusive or operator to achieve the cause value.

**Patentansprüche**

1. Einrichtung (410), die mindestens einen Prozessor und mindestens einen Speicher, der Computercode beinhaltet, umfasst, wobei der mindestens eine Speicher und der Computercode dazu ausgelegt sind, die Einrichtung mit dem mindestens einen Prozessor zu veranlassen, Folgendes durchzuführen:

   Empfangen einer Authentifizierungsanforderung (415), die mindestens eine Nonce und ein Authentifizierungstoken umfasst, von einer Netzwerkfunktion (420);
   Übertragen (405) mindestens der Nonce und des Authentifizierungstokens zu einem Teilnehmeridentitätsmodul (400), das in der Einrichtung (410) umfasst ist;
   Empfangen (406) einer Authentifizierungsfehlernachricht vom Teilnehmeridentitätsmodul (400), wobei die Authentifizierungsfehlernachricht einen Ursachenwert umfasst, der einem Nachrichtenauthentifizierungscodefehler oder einem in der Authentifizierungsfehlernachricht verborgenen Synchronisierungsfehler entspricht, durch Folgendes:

   Bereitstellen des Ursachenwertes als Eingabe in eine Nachrichtenauthentifizierungsfunktion zusammen mit einem langfristigen Schlüssel, einer Nonce und einem Authentifizierungsverwaltungsfeld;
   Bereitstellen des langfristigen Schlüssels und der Nonce als Eingabe in eine Schlüsselerzeugungsfunktion, um einen Anonymitätsschlüssel zu erhalten;
   Bereitstellen des Anonymitätsschlüssels und des Ursachenwertes als Eingabe in einen Exklusiv-Oder-Operator;
   Erzeugen der Authentifizierungsfehlernachricht als eine Verkettung einer Ausgabe des Exklusiv-Oder-Operators und einer Ausgabe der Nachrichtenauthentifizierungsfunktion; und
   wobei die Einrichtung veranlasst wird, Folgendes durchzuführen:
   Übertragen (416) der Authentifizierungsfehlernachricht zur Netzwerkfunktion (420).

2. Einrichtung (410) nach Anspruch 1, die ferner veranlasst wird, Folgendes durchzuführen:

   Empfangen eines generischen Ursachenwertes, der dem Nachrichtenauthentifizierungscodefehler oder einem Synchronisierungsfehler entspricht, zusammen mit der Authentifizierungsfehlernachricht, wobei der generische Ursachenwert 00010001 ist;
   Übertragen des generischen Ursachenwertes zur Netzwerkfunktion (420).

3. Einrichtung (410) nach Anspruch 2, die ferner veranlasst wird, Folgendes durchzuführen:
   Empfangen (438) einer neuen Nonce und eines neuen Authentifizierungstokens von der Netzwerkfunktion (440).

4. Einrichtung (440), die mindestens einen Prozessor und mindestens einen Speicher, der Computercode beinhaltet, umfasst, wobei der mindestens eine Speicher und der Computercode dazu ausgelegt sind, die Einrichtung mit dem mindestens einen Prozessor zu veranlassen, Folgendes durchzuführen:

   Erzeugen (441) einer Nonce und eines Authentifizierungstokens für eine Authentifizierungsanforderung;
   Übertragen (435) der Nonce und des Authentifizierungstokens zu einer Netzwerkfunktion;
   Empfangen (436) einer Authentifizierungsfehlernachricht und der Nonce von der Netzwerkfunktion, wobei die Authentifizierungsfehlernachricht einen Ursachenwert umfasst, der einem Nachrichtenauthentifizierungscodefehler oder einem in der Authentifizierungsfehlernachricht verborgenen Synchronisierungsfehler entspricht; und
   Aufheben des Verbergens (442) des Ursachenwertes in der Authentifizierungsfehlernachricht unter Verwendung der Nonce durch Folgendes:

   Bereitstellen der Nonce und eines langfristigen Schlüssels als Eingabe in eine Schlüsselerzeugungsfunktion, um einen Anonymitätsschlüssel zu erhalten; und
   Bereitstellen des Anonymitätsschlüssels und des verborgenen Ursachenwertes als Eingabe in einen Exklusiv-Oder-Operator, um den Ursachenwert zu erhalten.

5. Einrichtung (440) nach Anspruch 4, die ferner veranlasst wird, Folgendes durchzuführen:

   in Reaktion darauf, dass der Ursachenwert dem Nachrichtenauthentifizierungscodefehler entspricht;
   Übertragen (437) einer Aktualisierung zu einer Netzwerkfunktion mit dem nicht mehr verborgenen Ursachenwert.

6. Einrichtung (440) nach Anspruch 4, die ferner veranlasst wird, Folgendes durchzuführen:

in Reaktion darauf, dass der Ursachenwert dem Synchronisierungsfehler entspricht,
Erzeugen einer neuen Nonce und eines neuen Authentifizierungstokens;
Übertragen (438) der neuen Nonce und des neuen Authentifizierungstokens zu einer Teilnehmereinrichtung (410).

7. Einrichtung nach einem der Ansprüche 4 bis 6, wobei die Einrichtung eine vereinheitlichte Datenverwaltungsfunktion umfasst.

8. Einrichtung, die mindestens einen Prozessor und mindestens einen Speicher, der Computercode beinhaltet, umfasst, wobei der mindestens eine Speicher und der Computercode dazu ausgelegt sind, die Einrichtung mit dem mindestens einen Prozessor zu veranlassen, Folgendes durchzuführen:

Empfangen einer Nachricht, die mindestens eine Nonce und ein Authentifizierungstoken umfasst, von einer Teilnehmereinrichtung (410);
Detektieren (510) eines Nachrichtenauthentifizierungscodefehlers oder eines Synchronisierungsfehlers auf Basis der Nachricht;
Verbergen (520) eines Ursachenwertes, der dem Nachrichtenauthentifizierungscodefehler oder dem Synchronisierungsfehler entspricht, in einer Authentifizierungsfehlernachricht, wobei das Verbergen des Ursachenwertes Folgendes umfasst:

Bereitstellen des Ursachenwertes als Eingabe in eine Nachrichtenauthentifizierungsfunktion zusammen mit einem langfristigen Schlüssel, einer Nonce und einem Authentifizierungsverwaltungsfeld;
Bereitstellen des langfristigen Schlüssels und der Nonce als Eingabe in eine Schlüsselerzeugungsfunktion, um einen Anonymitätsschlüssel zu erhalten;
Bereitstellen des Anonymitätsschlüssels und des Ursachenwertes als Eingabe in einen Exklusiv-Oder-Operator;
Erzeugen der Authentifizierungsfehlernachricht als eine Verkettung einer Ausgabe des Exklusiv-Oder-Operators und einer Ausgabe der Nachrichtenauthentifizierungsfunktion; und
wobei die Einrichtung veranlasst wird, Folgendes durchzuführen:
Übertragen (530) der Authentifizierungsfehlernachricht zur Teilnehmereinrichtung (410).

9. Einrichtung (400) nach Anspruch 8, die ferner veranlasst wird, Folgendes durchzuführen
Übertragen eines generischen Ursachenwertes, der dem Nachrichtenauthentifizierungscodefehler oder dem Synchronisierungsfehler entspricht, zusammen mit der Authentifizierungsfehlernachricht, wobei der generische Ursachenwert 00010001 ist.

10. Einrichtung nach Anspruch 8 oder 9, wobei die Einrichtung ein Teilnehmeridentitätsmodul (400) ist.

11. Verfahren (600), das Folgendes umfasst

Empfangen (610) einer Authentifizierungsanforderung, die mindestens eine Nonce und ein Authentifizierungstoken umfasst, durch eine Teilnehmereinrichtung (410) von einer Netzwerkfunktion;
Übertragen (620) mindestens der Nonce und des Authentifizierungstokens zu einem Teilnehmeridentitätsmodul (400), das in der Einrichtung (410) umfasst ist;
Empfangen (630) einer Authentifizierungsfehlernachricht vom Teilnehmeridentitätsmodul (400), wobei die Authentifizierungsfehlernachricht einen Ursachenwert umfasst, der einem Nachrichtenauthentifizierungscodefehler oder einem in der Authentifizierungsfehlernachricht verborgenen Synchronisierungsfehler entspricht, durch Folgendes:

Bereitstellen des Ursachenwertes als Eingabe in eine Nachrichtenauthentifizierungsfunktion zusammen mit einem langfristigen Schlüssel, einer Nonce und einem Authentifizierungsverwaltungsfeld;
Bereitstellen des langfristigen Schlüssels und der Nonce als Eingabe in eine Schlüsselerzeugungsfunktion, um einen Anonymitätsschlüssel zu erhalten;
Bereitstellen des Anonymitätsschlüssels und des Ursachenwertes als Eingabe in einen Exklusiv-Oder-Operator;
Erzeugen der Authentifizierungsfehlernachricht als eine Verkettung einer Ausgabe des Exklusiv-Oder-Operators und einer Ausgabe der Nachrichtenauthentifizierungsfunktion; und
wobei das Verfahren Folgendes umfasst
Übertragen (630) der Authentifizierungsfehlernachricht zur Netzwerkfunktion.

**12.** Verfahren (300), das Folgendes umfasst

Empfangen (310) einer Nachricht, die mindestens eine Nonce und ein Authentifizierungstoken umfasst, durch ein Teilnehmeridentitätsmodul (400) von einer Teilnehmereinrichtung (410);
Detektieren (320) eines Nachrichtenauthentifizierungscodefehlers oder eines Synchronisierungsfehlers auf Basis der Nachricht;
Verbergen (330) eines Ursachenwertes, der dem Nachrichtenauthentifizierungscodefehler oder dem Synchronisierungsfehler entspricht, in einer Authentifizierungsfehlernachricht, wobei das Verbergen des Ursachenwertes Folgendes umfasst:

Bereitstellen des Ursachenwertes als Eingabe in eine Nachrichtenauthentifizierungsfunktion zusammen mit einem langfristigen Schlüssel, einer Nonce und einem Authentifizierungsverwaltungsfeld;
Bereitstellen des langfristigen Schlüssels und der Nonce als Eingabe in eine Schlüsselerzeugungsfunktion, um einen Anonymitätsschlüssel zu erhalten;
Bereitstellen des Anonymitätsschlüssels und des Ursachenwertes als Eingabe in einen Exklusiv-Oder-Operator;
Erzeugen der Authentifizierungsfehlernachricht als eine Verkettung einer Ausgabe des Exklusiv-Oder-Operators und einer Ausgabe der Nachrichtenauthentifizierungsfunktion; und
wobei das Verfahren Folgendes umfasst:
Übertragen (340) der Authentifizierungsfehlernachricht zur Teilnehmereinrichtung (410).

**13.** Verfahren (650), das Folgendes umfasst

Erzeugen (660) einer Nonce und eines Authentifizierungstokens für eine Authentifizierungsanforderung;
Übertragen (670) der Nonce und des Authentifizierungstokens zu einer Netzwerkfunktion;
Empfangen (680) einer Authentifizierungsfehlernachricht und der Nonce von der Netzwerkfunktion, wobei die Authentifizierungsfehlernachricht einen Ursachenwert umfasst, der einem Nachrichtenauthentifizierungscodefehler oder einem in der Authentifizierungsfehlernachricht verborgenen Synchronisierungsfehler entspricht; und
Aufheben des Verbergens (690) des Ursachenwertes in der Authentifizierungsfehlernachricht unter Verwendung der Nonce durch Bereitstellen der Nonce und eines langfristigen Schlüssels als Eingabe in eine Schlüsselerzeugungsfunktion, um einen Anonymitätsschlüssel zu erhalten; und
Bereitstellen des Anonymitätsschlüssels und des verborgenen Ursachenwertes als Eingabe in einen Exklusiv-Oder-Operator, um den Ursachenwert zu erhalten.

**Revendications**

**1.** Appareil (410), comprenant au moins un processeur ; et au moins une mémoire comportant un code informatique, l'au moins une mémoire et le code informatique étant configurés pour, avec l'au moins un processeur, amener l'appareil à :

recevoir d'une fonction réseau (420) une demande d'authentification (415) comprenant au moins un nonce [nombre aléatoire à usage unique] et un jeton d'authentification ;
transmettre (405) l'au moins un nonce et le jeton d'authentification à un module d'identité d'abonné (400) compris dans l'appareil (410) ;
recevoir (406) du module d'identité d'abonné (400) un message d'échec d'authentification, dans lequel le message d'échec d'authentification comprend une valeur de cause correspondant à un échec de code d'authentification de message ou à un échec de synchronisation dissimulée dans le message d'échec d'authentification :

en fournissant la valeur de cause comme entrée à une fonction d'authentification de message ainsi qu'une clé à long terme, qu'un nonce et qu'un champ de gestion d'authentification ;
en fournissant la clé à long terme et le nonce comme entrée à une fonction de génération de clé afin d'obtenir une clé d'anonymat ;
en fournissant la clé d'anonymat et la valeur de cause comme entrée à un opérateur ou exclusif ;

en générant le message d'échec d'authentification sous la forme d'une concaténation d'une sortie de l'opérateur OU exclusif et d'une sortie de la fonction d'authentification de message ; et dans lequel l'appareil est amené à :

transmettre (416) le message d'échec d'authentification à la fonction réseau (420).

2. Appareil (410) selon la revendication 1, amené en outre à :

recevoir une valeur de cause générique correspondant à l'échec de code d'authentification de message ou à un échec de synchronisation ainsi que le message d'échec d'authentification, dans lequel la valeur de cause générique est 00010001 ;
transmettre la valeur de cause générique à la fonction réseau (420).

3. Appareil (410) selon la revendication 2, amené en outre à :
recevoir (438) d'une fonction réseau (440) un nouveau nonce et un nouveau jeton d'authentification.

4. Appareil (440) comprenant au moins un processeur ; et au moins une mémoire comportant un code informatique, l'au moins une mémoire et le code informatique étant configurés pour, avec l'au moins un processeur, amener l'appareil à :

générer (441) un nonce et un jeton d'authentification pour une demande d'authentification ;
transmettre (435) le nonce et le jeton d'authentification à une fonction réseau ;
recevoir (436) de la fonction réseau un message d'échec d'authentification et le nonce, dans lequel le message d'échec d'authentification comprend une valeur de cause correspondant à un échec de code d'authentification de message ou à un échec de synchronisation dissimulée dans le message d'échec d'authentification ; et
dévoiler (442) la valeur de cause à partir du message d'échec d'authentification à l'aide du nonce :

en fournissant le nonce et une clé à long terme comme entrée à une fonction de génération de clé afin d'obtenir une clé d'anonymat ; et
en fournissant la clé d'anonymat et la valeur de cause dissimulée comme entrée à un opérateur OU exclusif afin d'obtenir la valeur de cause.

5. Appareil (440) selon la revendication 4, amené en outre à :

lorsque la valeur de cause correspond à l'échec de code d'authentification de message ;
transmettre (437) une mise à jour à une fonction réseau avec la valeur de cause dévoilée.

6. Appareil (440) selon la revendication 4, amené en outre à :

lorsque la valeur de cause correspond à l'échec de synchronisation, générer un nouveau nonce et un nouveau jeton d'authentification ;
transmettre (438) le nouveau nonce et le nouveau jeton d'authentification à un équipement utilisateur (410).

7. Appareil selon l'une des revendications 4 à 6, dans lequel l'appareil comprend une fonction de gestion de données unifiée.

8. Appareil comprenant au moins un processeur ; et au moins une mémoire comportant un code informatique, l'au moins une mémoire et le code informatique étant configurés pour, avec l'au moins un processeur, amener l'appareil à :

recevoir d'un équipement utilisateur (410) un message comprenant au moins un nonce et un jeton d'authentification ;
détecter (510) un échec de code d'authentification de message ou un échec de synchronisation sur la base du message ;
dissimuler (520) une valeur de cause correspondant à l'échec de code d'authentification de message ou à l'échec de synchronisation dans un message d'échec d'authentification, dans lequel la dissimulation de la valeur de cause comprend ce qui suit :

fournir la valeur de cause comme entrée à une fonction d'authentification de message ainsi qu'une clé à long terme, qu'un nonce et qu'un champ de gestion d'authentification ;
fournir la clé à long terme et le nonce comme entrée à une fonction de génération de clé afin d'obtenir une clé d'anonymat ;
fournir la clé d'anonymat et la valeur de cause comme entrée à un opérateur OU exclusif ;
générer le message d'échec d'authentification sous la forme d'une concaténation d'une sortie de l'opérateur OU exclusif et d'une sortie de la fonction d'authentification de message ; et dans lequel l'appareil est amené à :
transmettre (530) le message d'échec d'authentification à l'équipement utilisateur (410).

9. Appareil (400) selon la revendication 8, amené en outre à
transmettre une valeur de cause générique correspondant à l'échec de code d'authentification de message ou à l'échec de synchronisation ainsi que le message d'échec d'authentification, dans lequel la valeur de cause générique est 00010001.

10. Appareil selon la revendication 8 ou 9, dans lequel l'appareil est un module d'identité d'abonné (400).

11. Procédé (600) comprenant les étapes suivantes

recevoir (610) d'une fonction réseau, par un équipement utilisateur (410), une demande d'authentification comprenant au moins un nonce et un jeton d'authentification ;
transmettre (620) l'au moins un nonce et le jeton d'authentification à un module d'identité d'abonné (400) compris dans l'appareil (410) ;
recevoir (630) du module d'identité d'abonné (400) un message d'échec d'authentification, dans lequel le message d'échec d'authentification comprend une valeur de cause correspondant à un échec de code d'authentification de message ou à un échec de synchronisation dissimulée dans le message d'échec d'authentification :

en fournissant la valeur de cause comme entrée à une fonction d'authentification de message ainsi qu'une clé à long terme, qu'un nonce et qu'un champ de gestion d'authentification ;
en fournissant la clé à long terme et le nonce comme entrée à une fonction de génération de clé afin d'obtenir une clé d'anonymat ;
en fournissant la clé d'anonymat et la valeur de cause comme entrée à un opérateur OU exclusif ;
en générant le message d'échec d'authentification sous la forme d'une concaténation d'une sortie de l'opérateur OU exclusif et d'une sortie de la fonction d'authentification de message ; et dans lequel le procédé comprend l'étape suivante
transmettre (630) le message d'échec d'authentification à la fonction réseau.

12. Procédé (300) comprenant les étapes suivantes recevoir (310) d'un équipement utilisateur (410), par un module d'identité d'abonné (400), un message comprenant au moins un nonce et un jeton d'authentification ;

détecter (320) un échec de code d'authentification de message ou un échec de synchronisation sur la base du message ;
dissimuler (330) une valeur de cause correspondant à l'échec de code d'authentification de message ou à l'échec de synchronisation dans un message d'échec d'authentification, dans lequel la dissimulation de la valeur de cause comprend ce qui suit :

fournir la valeur de cause comme entrée à une fonction d'authentification de message ainsi qu'une clé à long terme, qu'un nonce et qu'un champ de gestion d'authentification ;
fournir la clé à long terme et le nonce comme entrée à une fonction de génération de clé afin d'obtenir une clé d'anonymat ;
fournir la clé d'anonymat et la valeur de cause comme entrée à un opérateur OU exclusif ;
générer le message d'échec d'authentification sous la forme d'une concaténation d'une sortie de l'opérateur OU exclusif et d'une sortie de la fonction d'authentification de message ; et dans lequel le procédé comprend l'étape suivante :
transmettre (340) le message d'échec d'authentification à l'équipement utilisateur (410).

13. Procédé (650) comprenant les étapes suivantes

générer (660) un nonce et un jeton d'authentification pour une demande d'authentification ;
transmettre (670) le nonce et le jeton d'authentification à une fonction réseau ;

recevoir (680) de la fonction réseau un message d'échec d'authentification et le nonce, dans lequel le message d'échec d'authentification comprend une valeur de cause correspondant à un échec de code d'authentification de message ou à un échec de synchronisation dissimulée dans le message d'échec d'authentification ; et
dévoiler (690) la valeur de cause à partir du message d'échec d'authentification à l'aide du nonce
en fournissant le nonce et une clé à long terme comme entrée à une fonction de génération de clé afin d'obtenir une clé d'anonymat ; et
en fournissant la clé d'anonymat et la valeur de cause dissimulée comme entrée à un opérateur OU exclusif afin d'obtenir la valeur de cause.

Fig. 1

Fig. 2

300

receiving, by a subscriber identity module from a
user equipment, a message comprising at least a
nonce and an authentication token

310

detecting a message authentication code failure or
a synchronization failure based on the message

320

concealing a cause value corresponding to the
message authentication code failure or the
synchronization failure into an authentication
failure message

330

transmitting the authentication failure message to
the user equipment

340

Fig. 3

Fig. 4

400

SIM

410

UE

505

RAND, AUTN

510

Detect a MAC
failure or a
synchronization
failure

520

Cause value

K

RAND

AMF

f1*

f5*

xor

MAC-S

AK

Cause value⊕AK

AUTS=Cause value⊕AK∥MAC-S

AUTS

530

Fig. 5

600

comprises receiving, by a user equipment from a network function, an authentication request comprising at least a nonce and an authentication token

610

transmitting at least the nonce and the authentication token to a subscriber identity module comprised in the apparatus

620

receiving an authentication failure message from the subscriber identity module, wherein the authentication failure message comprises a cause value corresponding to a message authentication code failure or a synchronization failure concealed into the authentication failure message

630

transmitting the authentication failure message to the network function

640

Fig. 6a

650

generating a nonce and an authentication token for an authentication request

660

transmitting the nonce and the authentication token to a network function

670

receiving an authentication failure message and the nonce from the network function, wherein the authentication failure message comprises a cause value corresponding to a message authentication code failure or a synchronization failure concealed into the authentication failure message

680

de-concealing the cause value from the authentication failure message using the nonce

690

Fig. 6b

700

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020147602 A

- WO 2020198991 A

### Non-patent literature cited in the description

- 3rd Generation Partnership Project, 3GPP Standard; TR 33.846. *XP051999404* (vO.IO.O)